# EUROPEAN PATENT APPLICATION

(11) **EP 4 324 334 A1**
(43) Date of publication of application: **21.02.2024**
(21) Application number: 22199866.9
(22) Date of filing: 05.10.2022
(51) Int. Cl.: A23L 5/10, A23L 19/00, A23N 1/00, A23N 1/02, A47J 19/02, A47J 19/06

(54) **TEMPERATURE CONTROL SYSTEM FOR DOMESTIC FOOD PROCESSOR AND FOOD PROCESSING METHOD**

(30) Priority: 18.08.2022 WO PCT/CN2022/113428
(71) Applicant: Versuni Holding B.V., 5656 AE Eindhoven (NL)
(72) Inventor: CHEN, Yun, 5656 AE Eindhoven (NL)
(74) Representative: Vollering, Stefanus Franciscus Maria

(57) **Abstract**

Provided is a temperature control system (100) for conditioning food received in a food preparation container (104) of a domestic food processor (112) having a mechanical food processing system (114) for extracting juice from the conditioned food. The temperature control system is configured to implement a food conditioning stage in which an atmosphere (102) inside the food preparation container is heated by the temperature control system for at least 3 minutes and no longer than 8 minutes at a temperature of at least 80°C and no higher than 120°C. Further provided is a domestic food processor (112) comprising the temperature control system, and a method, and related computer program, for processing food.

## Description

### FIELD OF THE INVENTION

The invention relates to a temperature control system for a domestic food processor equipped with a mechanical food processing system. The invention also relates to such a domestic food processor comprising the temperature control system. The invention yet further relates to a method for processing food.

### BACKGROUND OF THE INVENTION

Many consumers make use of juicers and/or blenders to assist them in consuming healthy food types, such as vegetables and fruits, which are rich in nutrients, such as dietary fibre, vitamins, and minerals.

Consumers' concerns about processed food can mean that they desire the food they are consuming to be as close as possible to raw ingredients. Freshness is a key attribute and an indicator of goodness.

Whilst consumers enjoy the freshness of healthy fruit and vegetable drinks, such drinks tend not to stay fresh for long. Juices can lose taste, colour and separate relatively quickly after preparation.

Such separation or sedimentation is not desirable from consumers' point of view. They may associate sedimentation or separation with poor quality, and regard the separated drink to have inferior freshness.

There are currently several solutions on the market aiming to prolong the freshness of fruit and vegetable drinks. For example, so-called vacuum blenders are available that provide oxygen-free conditions for smoothie making. When using such a device, micronutrients that are sensitive to oxygen can be preserved.

Whilst offering a promising approach for preserving freshness, the manner in which the drinks prepared in the vacuum blender is stored after blending can present a problem. This is because when the vacuum blender is opened after blending, the smoothie is exposed to environmental conditions, for instance light and oxygen, and oxidation can occur. The freshness of the drink is consequently affected.

Portable blenders offer an alternative approach to providing the consumer with fresh fruit and vegetable drinks. However, a disadvantage of such portable blenders is that the consumer is required to prepare ingredients, in particular by cutting the ingredients into pieces, in advance. When the consumer is on the move, such pre-cut ingredients risk being oxidized prior to being blended. Moreover, such portable blenders may not offer an efficient way to preserve the freshness of the drinks once they have been blended. For this reason, immediate consumption of the drink prepared using the portable blender is recommended.

Also known are sensors and indicators used in smart food packaging for tracking the freshness of foods, in particular tracking the freshness of foods in the supply chain. Such sensors tend to be mainly used for monitoring the freshness of meat, seafood, frozen foods, milk-based products and fresh fruits. Common indicators/sensors include time and temperature indicators (TTI) which are relatively widely used to monitor quality by tracking the temperature conditions to which foodstuffs have been exposed over time; freshness indicators which directly indicate the quality of the product by detecting volatile metabolites linked to the metabolism of microorganisms, such as amines, organic acids, glucose and so on; gas sensors used for tracking leakage within packaging and monitoring the spoilage progress via measurement of the concentration of certain gases, such as O₂, CO₂ or H₂S; biosensors focusing on tracking and monitoring foodborne pathogens; and electronic nose and tongue sensing systems that, whilst not yet fully commercialized, employ taste and smell sensors for sensing freshness and quality of foods.

The above-described sensors and indicators may not necessarily be suitable or convenient for providing information to a consumer concerning the status of a fruit or vegetable drink they have prepared themselves under domestic/household conditions, and such a sensing approach cannot by itself assist to preserve the freshness of such drinks, and in particular cannot by itself mitigate the issue of separation of such drinks relatively quickly after their preparation under domestic/household conditions.

### SUMMARY OF THE INVENTION

The invention is defined by the claims.

According to examples in accordance with an aspect of the invention, there is provided a temperature control system for conditioning food received in a food preparation container of a domestic food processor having a mechanical food processing system for extracting juice from the conditioned food, wherein the temperature control system is configured to implement a food conditioning stage in which an atmosphere inside the food preparation container is heated by the temperature control system for at least 3 minutes and no longer than 8 minutes at a temperature of at least 80°C and no higher than 120°C.

The food being conditioned may be any suitable juice-containing food. Typically the food is fruit and/or vegetables. The food may comprise a single fruit or vegetable, or multiple fruits and/or vegetables.

The present disclosure is partly based on the insight, gained from experimental investigations described herein below, that heating the atmosphere inside the food preparation container to a temperature of at least 80°C for at least 3 minutes leads to inhibition of sedimentation in the juice extracted from the conditioned food.

Without wishing to be bound by any particular theory, the food conditioning stage may inhibit sediment formation through inactivation of the enzyme pectin methylesterase (PME). This inactivation, in turn, may minimise degradation of pectin, and thereby assist to minimise pectin degradation-related sedimentation and separation in the juice.

It was further found that by the heating being for no longer than 8 minutes and to a temperature of the atmosphere inside the food preparation container no higher than 120°C, the sedimentation inhibition is achievable with minimal compromise in terms of the taste and/or nutrient content of the juice. This is because such upper limits for the temperature and duration of the food conditioning stage may assist to avoid significant increases in the core temperature of the food.

In some embodiments, in the food conditioning stage, the atmosphere inside the food preparation container is heated for at least 5 minutes at said temperature of at least 80°C and no higher than 120°C.

Maintaining the temperature for at least 5 minutes was found to result in superior sediment inhibition. Without wishing to be bound by theory, it is thought that heating for at least 5 minutes results in a greater extent of PME inactivation.

It was found that superior sedimentation inhibition could be achieved by heating the atmosphere inside the food preparation container to a temperature of 120°C for 3 minutes.

In some embodiments, the mechanical food processing comprises blending, pressing and/or shredding of the food to extract the juice from the food.

The temperature control system may implement the food conditioning stage using a predetermined heating program configured to ensure that the atmosphere of the food preparation container is heated for at least 3 minutes and no longer than 8 minutes at the temperature of at least 80°C and no higher than 120°C.

Alternatively or additionally, the temperature control system may include one or more temperature sensors arranged to sense a measure of the temperature of the atmosphere inside the food preparation container. In such embodiments, the temperature control system may implement the food conditioning stage using feedback control based on the sensed measure of the temperature of the atmosphere inside the food preparation container.

In some embodiments, the temperature control system comprises a steam generator configured to implement the food conditioning stage by applying steam to, e.g. supplying steam into the atmosphere of, the food preparation container.

Such a steam generator produces steam, which is applied to, e.g. supplied into, the food preparation container to heat the atmosphere of the food preparation container in the food conditioning stage.

Employing a steam generator to implement the food conditioning stage may be particularly effective owing to the relatively rapid and even heating of the atmosphere of the food preparation container provided by steam heating.

In such embodiments, the steam generator may comprise a heater and a water tank for storing water, with the heater being configured to heat the water to generate steam for applying to the food preparation container.

In some embodiments, the temperature control system is controllable according to a user entry entered via a user interface.

In such embodiments, the user entry may be relevant to a duration and/or the temperature of the atmosphere of the food preparation container used in the food conditioning stage, subject to the atmosphere inside the food preparation container being heated for at least 3 minutes and no longer than 8 minutes at the temperature of at least 80°C and no higher than 120°C.

In some embodiments, the user entry comprises a food identifier for identifying a food or foods to be conditioned.

The food identifier may, for example, identify a single food to be conditioned. In alternative embodiments, the food identifier may identify a plurality of foods to be conditioned together in the food preparation container.

The user may wish to extract juice from different foods, and the composition and/or levels of PME in such different foods may mean that adjustment of the temperature and/or duration of the food conditioning stage (but within the above-identified limits of at least 3 minutes and no longer than 8 minutes at the temperature of at least 80°C and no higher than 120°C) is desirable according to the particular food(s) being selected by the user for conditioning.

For example, a shorter food conditioning stage at a lower temperature may be more effective for apple than for celery.

The user interface may, for example, be included in the domestic food processor.

Alternatively or additionally, the user interface may be included in an external user device, such as a smartphone or tablet computer, separate from the temperature control system and the domestic food processor.

In some embodiments, the temperature control system is controllable by one or more processors to implement the food conditioning stage.

Such processor(s) may be included in the temperature control system itself, the domestic food processor, in an external user device, such as a smartphone or tablet computer, separate from the temperature control system and the domestic food processor, and/or in a cloud-based server.

In embodiments in which the temperature control system is configured to implement the food conditioning stage based on the user entry via the user interface, the processor(s) may be configured to control the temperature control system based on the user entry.

According to another aspect there is provided a domestic food processor having a mechanical food processing system for extracting juice from food, and a food preparation container in which the food is receivable, wherein the domestic food processor further comprises the temperature control system according to any of the embodiments described herein, with the temperature control system being configured to implement the food conditioning stage in which the atmosphere inside the food preparation container is heated for at least 3 minutes and no longer than 8 minutes at said temperature of at least 80°C and no higher than 120°C.

Thus, the temperature control system may be conveniently supplied to the user together with the food preparation container and the mechanical food processing system of the domestic food processor.

In some embodiments, the domestic food processor is one or more of a blender, a smoothie maker and a juicer.

In some embodiments, the mechanical food processing system comprises a food processing container in which the food conditioned in the food conditioning stage is receivable for mechanical food processing.

In such embodiments, the conditioned food may be transferrable from the food preparation container to the food processing container, e.g. via a port arranged between the food preparation container and the food processing container.

In some embodiments, an auger is arranged in the food processing container, with rotation of the auger, e.g. combined with tapering of the food processing container, enabling extraction of the juice from the conditioned food.

In other embodiments, the mechanical food processing system is configured to extract the juice from the conditioned food while the conditioned food remains in the food preparation container.

In at least some embodiments, the mechanical food processing system is configured to extract juice from the food subsequently to the food being conditioned in the food conditioning stage.

The food conditioning stage and the subsequent juice extraction from the conditioned food may be implemented automatically, e.g. by the temperature control system and the mechanical food processing system being under the control of one or more processors.

Such automatic implementation of the subsequent juice extraction may assist to alleviate burden on the user to him/herself initiate the juice extraction following completion of the food conditioning stage.

According to a yet another aspect there is provided a method for processing food received in a food preparation container of a domestic food processor also having a mechanical food processing system, the method comprising implementing a food conditioning stage in which an atmosphere inside the food preparation container is heated for at least 3 minutes and no longer than 8 minutes at a temperature of at least 80°C and no higher than 120°C.

As described above in respect of the temperature control system, the implementing may comprise controlling a steam generator to apply steam to e.g. supply steam into the atmosphere of, the food preparation container.

In some embodiments, and as described above in respect of the temperature control system, in the food conditioning stage, the food preparation container is heated for at least 5 minutes at said temperature of at least 80°C and no higher than 120°C.

In some embodiments, the method further comprises receiving a user entry relevant to the food conditioning stage, wherein the food conditioning stage is implemented based on said user entry, subject to the atmosphere inside the food preparation container being heated for at least 3 minutes and no longer than 8 minutes at the temperature of at least 80°C and no higher than 120°C.

In at least some embodiments, the method further comprises controlling the mechanical food processing system to mechanically process the food conditioned by the food conditioning stage to extract juice therefrom.

In some embodiments, liquid is introduced to the food, e.g. to the food preparation container in which the conditioned food is received, to cool the food after the food conditioning stage but before the controlling the mechanical food processing system to mechanically process the food conditioned by the food conditioning stage to extract juice therefrom.

In some embodiments, the introduction of liquid may be implemented by a liquid supply included in the domestic food processor being controlled, e.g. by the processor(s), to introduce the liquid to the conditioned food following the food conditioning stage.

Alternatively or additionally, the method comprises controlling a user interface, e.g. by the processor(s) controlling the user interface, to recommend the user to add liquid, such as water, milk and/or another potable liquid, to the conditioned food following the food conditioning stage.

Such processor(s) may further control the temperature control system to implement the food conditioning stage and to control the mechanical food processing system to mechanically process the condition food, as previously described.

In some embodiments, the food conditioned by the food conditioning stage is used immediately for juice extraction, e.g. without any cooling of the conditioned food.

The controlling the mechanical food processing system to mechanically process the food may begin within 10 minutes after the end of the food conditioning stage.

In some embodiments, a core temperature of the food is maintained at 80°C or less during said food conditioning stage.

By maintaining the core temperature of the food heated in the food conditioning stage at 80°C or less, juice extraction from the conditioned food may be enabled within 10 minutes of the end of the food conditioning stage, for example immediately following the end of the food conditioning stage.

According to a further aspect there is provided a computer program comprising computer program code that is configured, when said computer program is run on one or more processors, to cause said one or more processors to control a temperature control system to implement the food conditioning stage of the method according to any of the embodiments described herein.

In some embodiments, the computer program code is further configured to cause the one or more processors to control a mechanical food processing system to mechanically process the food conditioned by the food conditioning stage to extract juice therefrom.

One or more non-transitory computer readable media may be provided, which non-transitory computer readable media have a computer program stored thereon, with the computer program comprises computer program code which is configured, when the computer program is run on the one or more processors, to cause the one or more processors to implement the method according to any of the embodiments described herein.

The one or more processors can be included in one or more of the temperature control system; the domestic food processor; the external user device, for example a smartphone or tablet computer, separate from the temperature control system and the domestic food processor; and a cloud-based server.

More generally embodiments described herein in relation to the method and computer program may be applicable to the temperature control system and/or the domestic food processor, and embodiments described herein in relation to the temperature control system and the domestic food processor may be applicable to the method and/or the computer program.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
FIG. 1 schematically depicts a domestic food processor equipped with a temperature control system according to an example;
FIG. 2 provides a block diagram for illustrating processor control of a temperature control system according to an example;
FIG. 3 schematically depicts a domestic food processor equipped with a temperature control system according to another example;
FIG. 4 provides a flowchart of a method according to an example;
FIG. 5 provides a diagram of system components and method steps according to an example; and
FIG. 6 provides a diagram of method steps according to another example.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Provided is a temperature control system for conditioning food received in a food preparation container of a domestic food processor having a mechanical food processing system for extracting juice from the conditioned food. The temperature control system is configured to implement a food conditioning stage in which an atmosphere inside the food preparation container is heated by the temperature control system for at least 3 minutes and no longer than 8 minutes at a temperature of at least 80°C and no higher than 120°C. Further provided is a domestic food processor comprising the temperature control system, and a method, and related computer program, for processing food.

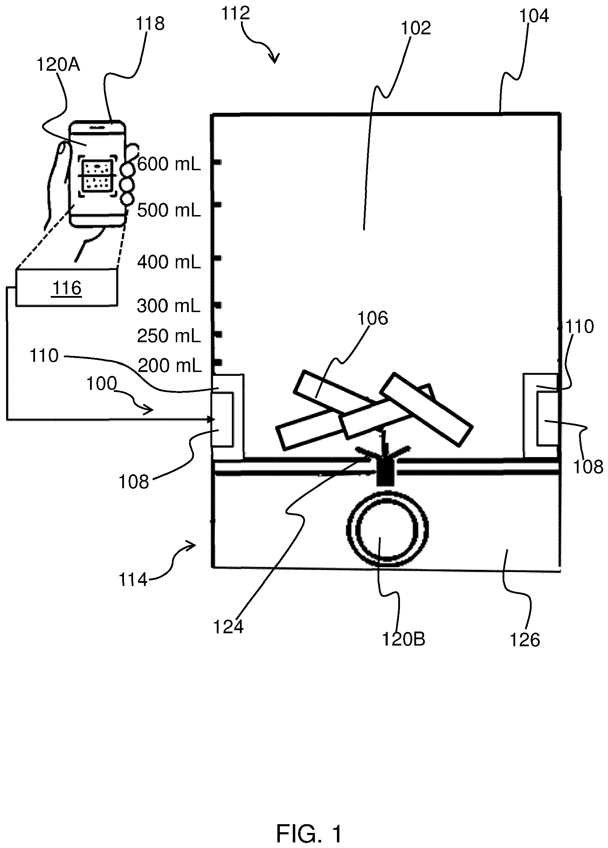

FIG. 1 shows a temperature control system 100 according to an example. The temperature control system 100 is configured to heat an atmosphere 102 of a food preparation container 104 in which food 106 is received.

The food 106 may be any suitable juice-containing food. Typically the food 106 is fruit and/or vegetables. The food 106 may comprise a single fruit or vegetable, or multiple fruits and/or vegetables.

The temperature control system 100 is configured to implement a food conditionining stage in which the atmosphere 102 inside the food preparation container 104 is heated by the temperature control system 100 for at least 3 minutes and no longer than 8 minutes at a temperature of at least 80°C and no higher than 120°C.

The primary cell wall of natural food ingredients, such as fruit and vegetables, mainly comprises water, pectin, cellulose, and hemicellulose. Pectin controls cell wall porosity and has been shown to exhibit structural variation during plant growth.

Pectin may be a major component of juice cloud, has been found to play an important role in juice destabilization in the presence of the active enzyme pectin methylesterase (PME), which is naturally occurring in such food ingredients. The continuous degradation of pectin molecules catalysed by PME may result in sediment and separation in juice drinks.

It has been found experimentally, as described herein below, that by heating the atmosphere 102 inside the food preparation container 104 to a temperature of at least 80°C for at least 3 minutes sedimentation in juice extracted from the thus conditioned food can be inhibited.

Such conditions are considered, without wishing to be bound by any particular theory, to inhibit sediment formation through inactivation of PME. This inactivation, in turn, may minimise degradation of pectin, and thereby assist to minimise pectin degradation-related sedimentation and separation in the juice. In other words, this sedimentation inhibition may be rationalized by the activity of PME decreasing sharply when the conditioning temperature is above 80°C.

Moreover, due to the heating being for no longer than 8 minutes and to a temperature of the atmosphere 102 inside the food preparation container 104 no higher than 120°C, the sedimentation inhibition is achievable with minimal compromise in terms of the taste and/or nutrient content of the juice. This is because such upper limits for the temperature and duration of the food conditioning stage may assist to avoid significant increases in the core temperature of the food 106.

In some embodiments, in the food conditioning stage, the atmosphere 102 inside the food preparation container 104 is heated for at least 5 minutes at the temperature of at least 80°C and no higher than 120°C. Maintaining the temperature for at least 5 minutes was found to result in superior sediment inhibition. Without wishing to be bound by theory, it is thought that heating for at least 5 minutes results in a greater extent of PME inactivation.

It was found, as will be explained in more detail herein below, that superior sedimentation inhibition could be achieved by heating the atmosphere 102 inside the food preparation container 104 to a temperature of 120°C for as little as 3 minutes.

In at least some embodiments, such as that shown in FIG. 1, the temperature control system 100 comprises a heater 108, which heater 108 is controlled to heat the atmosphere 102 of the food preparation container 104 in order to implement the food conditioning stage.

In such embodiments, the heater 108 may be configured to heat the atmosphere 102 of the food preparation container 104 radiatively and/or by convection.

In some embodiments, the temperature control system 100 further comprises a circulation system, for instance in the form of a motor and fan (not visible), arranged to circulate gas heated by the heater 108 within the food preparation container 104 in order to heat the atmosphere 102 inside the food preparation container 104.

In some embodiments, such as that shown in FIG. 1, the temperature control system 100 comprises a steam generator 108, 110 configured to implement the food conditioning stage by applying steam to, e.g. supplying steam into the atmosphere 102 of, the food preparation container 104.

Employing a steam generator 108, 110 to implement the food conditioning stage by heating the atmosphere 102 of the food preparation container 104 using steam, e.g. steam supplied into the atmosphere 102 of the food preparation container 104, may be particularly effective owing to the relatively rapid and even heating of the atmosphere 102 of the food preparation container 104 provided by steam heating.

In order to supply steam into the atmosphere 102 of the food preparation container 104, a steam conduit (not visible) can extend between the steam generator 108, 110 and the food preparation container 104 for carrying steam from the steam generator 108, 110 to the atmosphere 102 of the food preparation container 104.

In such embodiments, the steam generator 108, 110 may comprise the heater 108 and a water tank 110 for storing water, with the heater 108 being configured to heat the water to generate steam for applying to, e.g. into, the food preparation container 104.

In some embodiments, such as that shown in FIG. 1, the heater 108 may include a pair of heating elements arranged at opposing sides of the food preparation container 104, each of the heating elements being arranged to convert water contained one of a pair of water vessels included in the water tank 110, with each of the water vessels being respectively arranged at one of the opposing sides of the food preparation container 104.

This may provide a relatively efficient and compact way of implementing the steam generator 108, 110.

In alternative examples (not shown), the steam generator 108, 110 is provided as a separate unit with respect to the food preparation container 104, e.g. with the steam conduit extending from the steam generator 108, 110 to the food preparation container 104 spatially separated from the steam generator 108, 110.

In some embodiments, the temperature control system 100 is provided, e.g. supplied to the user, separately from the food preparation container 104.

For example, the temperature control system 100 comprising the steam generator 108, 110 may be provided, e.g. supplied to, the user for the user to him/herself connect to the food preparation container 104.

In some embodiments, the food preparation container 104 is included in the temperature control system 100.

The present disclosure more generally contemplates the temperature control system 100 being provided, e.g. supplied, to the user in a domestic food processor 112 having a mechanical food processing system 114. An example of this is shown in FIG. 1.

In some embodiments, the domestic food processor 112 is one or more of a blender, a smoothie maker and a juicer.

In some embodiments, such as that shown in FIG. 1, the temperature control system 100 is controllable by one or more processors 116 to implement the food conditioning stage.

Such processor(s) 116 may be included in the temperature control system 100 itself, the domestic food processor 112, in an external user device 118, such as a smartphone or tablet computer, separate from the temperature control system 100 and the domestic food processor 112, and/or in a cloud-based server.

In embodiments in which the temperature control system 100 comprises the heater 108, e.g. the steam generator 108, 110 comprising the heater 108, the processor(s) 116 may be configured to control the heater 108 in order to implement the food conditioning stage.

In embodiments in which the temperature control system 100 comprises the steam generator 108, 110, the processor(s) 116 may be configured to control one or more of the heater 108, a water supply (not visible) arranged to dose water onto the heater 108 to generate steam, and a valve (not visible) arranged to control supply of the steam to the food preparation container 104 in order to implement the food conditioning stage.

Alternatively or additionally, in embodiments in which the temperature control system 100 includes the circulation system, the processor(s) 116 may be configured to control the circulation system, e.g. a speed of rotation of the motor driving the fan, and the heater 108 in order to implement the food conditioning stage.

The temperature control system 100 may implement the food conditioning stage using a predetermined heating program, e.g. loaded onto the processor(s) 116 configured to control the temperature control system 100, which predetermined heating program is configured to ensure that the atmosphere 102 in the food preparation container 104 is heated for at least 3 minutes and no longer than 8 minutes at the temperature of at least 80°C and no higher than 120°C.

Such a predetermined heating program may be straightforwardly implementable when, for example, the temperature control system 100 is provided, e.g. supplied, to the user together with the food preparation container 104 whose atmosphere is to be controlled by the temperature control system 100.

This is because the dimensions and heat transfer properties of such an as-supplied food preparation container 104 may already have been established to enable predetermining of the heating program.

Alternatively or additionally, the temperature control system 100 may include one or more temperature sensors (not visible) arranged to sense a measure of the temperature of the atmosphere 102 inside the food preparation container 104. In such embodiments, the temperature control system 100 may implement the food conditioning stage using feedback control based on the sensed measure of the temperature of the atmosphere 102 inside the food preparation container 104.

In some embodiments, such as that shown in FIG. 1, the temperature control system 100 is controllable via a user entry entered by a user using a user interface 120A, 120B, which user entry is relevant to the food conditioning stage.

The user entry may be relevant to a duration and/or the temperature of the atmosphere 102 of the food preparation container 104 used in the food conditioning stage, subject to the atmosphere 102 inside the food preparation container 104 being heated for at least 3 minutes and no longer than 8 minutes at the temperature of at least 80°C and no higher than 120°C.

In such embodiments, the processor(s) 116 may be configured to control the temperature control system 100 based on the user entry.

In other words, the processor(s) 116 may be configured to receive the user entry from the user interface 120A, 120B, and control the temperature control system 100 based on the received user entry.

In some embodiments, the user entry comprises a food identifier for identifying a food or foods 106 to be conditioned.

The food identifier may, for example, identify a single food 106 to be conditioned. In alternative embodiments, the food identifier may identify a plurality of foods 106 to be conditioned together in the food preparation container 104.

The user may wish to extract juice from different foods 106, and the composition and/or levels of PME in such different foods 106 may mean that adjustment of the temperature and/or duration of the food conditioning stage (but within the above-identified limits of at least 3 minutes and no longer than 8 minutes at the temperature of at least 80°C and no higher than 120°C) is desirable according to the particular food(s) 106 being selected by the user for conditioning.

For example, a shorter food conditioning stage at a lower temperature may be more effective for apple than for celery.

In some embodiments, the user interface 120A, 120B is included in the external user device 118, such as a smartphone or tablet computer.

Alternatively or additionally, the user interface 120A, 120B is included in the temperature control system 100 and/or is included in the domestic food processor 112.

In at least some embodiments, following completion, in other words termination, of the food conditioning stage, juice is extracted from the conditioned food 106 via operation of the mechanical food processing system 114.

The user may control the mechanical food processing system 114 manually, following completion of the food conditioning stage, to mechanically extract juice from the conditioned food 106, for instance by the user operating the mechanical food processing system 114 via the user interface 120B included in the domestic food processor 112.

In some embodiments, the processor(s) 116 is or are configured to control the mechanical food processing system 114 to mechanically process the conditioned food 106 to extract juice therefrom following completion of the food conditioning stage, for example following the processor(s) 116 initially controlling the temperature control system 100 to implement the food conditioning stage.

Such automatic implementation of the subsequent juice extraction may assist to alleviate burden on the user to him/herself initiate the mechanical food processing following completion of the food conditioning stage.

In such embodiments, the controlling the mechanical food processing system 114 to mechanically process the food may begin within 10 minutes after the end of the food conditioning stage.

Due to the heating in the food conditioning stage being for no longer than 8 minutes and to a temperature of the atmosphere 102 inside the food preparation container 104 no higher than 120°C, the food 106 may be sufficiently cooled for the mechanical food processing to be implemented within 10 minutes of termination of the food conditioning stage.

This may be due to these upper limits of the temperature and the duration assisting to limit an increase in the core temperature of the food 106.

In some embodiments, a core temperature of the food 106 is maintained at 80°C or less during said food conditioning stage.

The core temperature of the food 106 can, for example, be monitored via insertion of a temperature probe to reach the center of the food 106, in particular the center of each piece of food 106.

By maintaining the core temperature of the food 106 heated in the food conditioning stage at 80°C or less, juice extraction from the conditioned food 106 may be implemented within a relatively short period of time, for example immediately, following the end of the food conditioning stage without, for example, the requirement to add liquid to the conditioned food 106 in order to cool the conditioned food 106, e.g. for nutrient and/or taste preservation reasons, prior to initiation of the mechanical food processing.

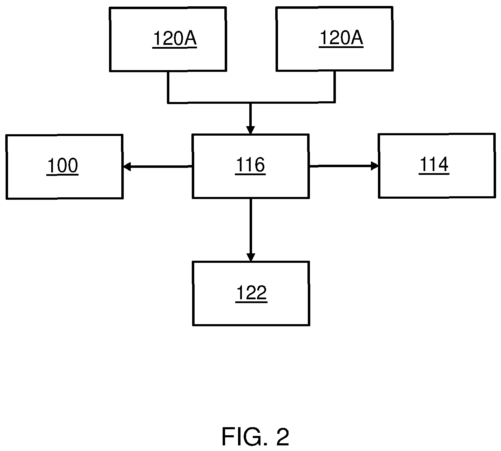

It is nonetheless contemplated that in some embodiments, such as that shown in FIG. 2, a liquid supply 122, e.g. a liquid supply 122 included in the temperature control system 100 and/or in the domestic food processor 112 may be controllable to introduce liquid, in other words cooling liquid, e.g. room temperature liquid, such as water, milk and/or another potable liquid, to the conditioned food 106 after completion of the food conditioning stage.

This may assist the mechanical food processing by the mechanical food processing system 114 to be implemented sooner following completion of the food conditioning stage.

In some embodiments, such as that shown in FIG. 1, the processor(s) 116 is or are configured to control the temperature control system 100 to implement the food conditioning stage, control the liquid supply 122 to introduce liquid to the conditioned food 106 following completion of the food conditioning stage to cool the conditioned food 106.

In such embodiments, the processor(s) 116 may be further configured to control the mechanical food processing system 114 to mechanically process the conditioned and cooled food 106 following the introduction of liquid to the conditioned food 106.

In other embodiments, the mechanical food processing system 114 is manually controllable by the user following the introduction of liquid to the conditioned food 106.

The mechanical food processing by the mechanical food processing system 114 can be implemented in any suitable manner in order to extract juice from the food 106.

In at least some embodiments, the mechanical food processing comprises blending, pressing and/or shredding of the food 106 to extract the juice from the food 106.

In some embodiments, and referring again to FIG. 1, the mechanical food processing system 114 comprises a food blending member 124, for example a food blending member 124 comprising one or more blades, and a motorized drive system 126 configured to rotate the food blending member 124.

In such embodiments, the mechanical food processing system 114 may further include a sieve, such as a sieve also rotatable by the motorized drive system 126, for filtering the juice from the pulp resulting from blending by rotation of the food blending member 124.

The food conditioning stage can assist to suppress separation of, in other words sedimentation in, the filtered juice.

In some embodiments, such as that shown in FIG. 1, the mechanical food processing system 114 is configured to extract the juice from the conditioned food 106 while the conditioned food remains in the food preparation container 104.

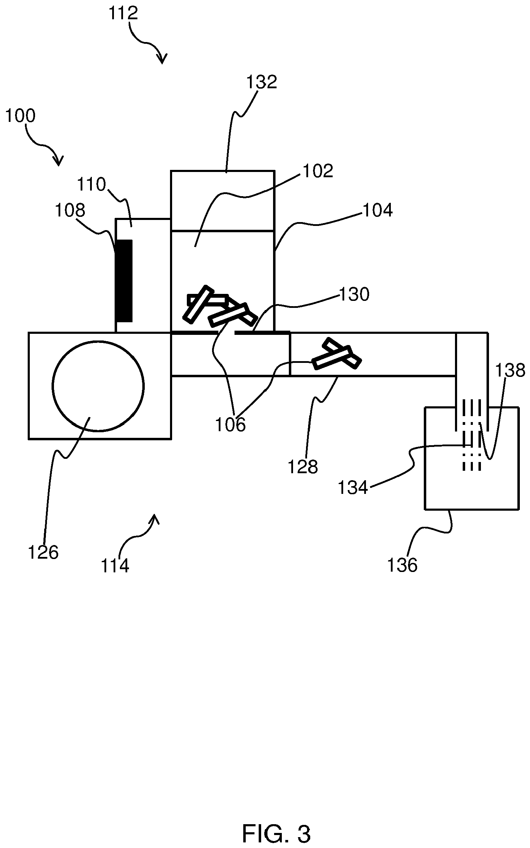

In other embodiments, such as that shown in FIG. 3, the mechanical food processing system 114 comprises a food processing container 128 in which the food 106 conditioned in the food conditioning stage is receivable for mechanical food processing.

In such embodiments, the conditioned food 106 may be transferrable from the food preparation container 104 to the food processing container 128, e.g. via a port arranged between the food preparation container 104 and the food processing container 128.

In some embodiments, such as that shown in FIG. 3, the food 106 in the food preparation container 104 is supportable on one or more movable support portions 130, e.g. in the form of collapsible planks, whose movement enables the conditioned food 106 to pass from the food preparation container 104 into the food processing container 128, e.g. via the port.

In such embodiments, the domestic food processor 114 may include a pusher 132, e.g. a plug, configured to enable the user to push on the conditioned food 106 to force the food 106 into the food processing container 128, for example by the pushing of the pusher 132 causing movement of the movable support portions 130, e.g. temporary collapse of the above-mentioned collapsible planks.

In some embodiments, an auger (not visible) is arranged in the food processing container 128, with rotation of the auger, e.g. combined with tapering of the food processing container 128, enabling extraction of the juice 134 from the conditioned food 106.

In such embodiments, and as schematically depicted in FIG. 3, the mechanical food processing system 114 can include a motorized drive system 126 configured to drive rotation of the auger.

As shown in FIG. 3, the extracted juice 134 may be released to a container 136 via an outlet 138 of the food processing container 128.

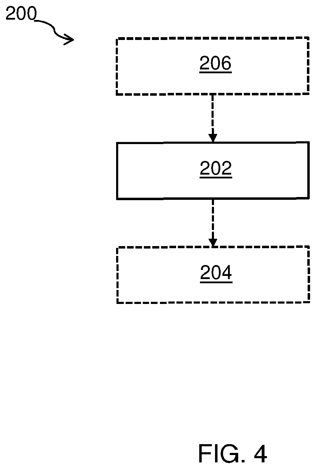

FIG. 4 provides a flowchart of a method 200 for processing food received in a food preparation container of a domestic food processor. The method 200 comprises implementing 202 a food conditioning stage in which an atmosphere inside the food preparation container is heated for at least 3 minutes and no longer than 8 minutes at a temperature of at least 80°C and no higher than 120°C.

The implementing 202 may comprise using the temperature control system 100 according to any of the embodiments described herein.

Thus, in some embodiments, the implementing 202 comprises controlling a steam generator to apply steam to, e.g. supply steam into the atmosphere of, the food preparation container in order to heat the atmosphere in the food preparation container for at least 3 minutes and no longer than 8 minutes at a temperature of at least 80°C and no higher than 120°C.

In at least some embodiments, the method 200 comprises controlling 204 a mechanical food processing system included in the domestic food processor to mechanically process the food conditioned by the food conditioning stage to extract juice therefrom.

In such embodiments, the controlling 204 the mechanical food processing system may be by the user manually operating the mechanical food processing system to mechanically process the conditioned food to extract juice therefrom.

Alternatively, the controlling 204 the mechanical food processing system may be by one or more processors controlling the mechanical food processing system.

In some embodiments, the controlling 204 the mechanical food processing system to mechanically process the food may begin within 10 minutes after the end of the food conditioning stage.

In some embodiments, a core temperature of the food is maintained at 80°C or less during said food conditioning stage, as previously described.

In some embodiments, the method 200 further comprises receiving 206 a user entry relevant to the food conditioning stage, wherein the food conditioning stage is implemented 202 based on the user entry, subject to the atmosphere inside the food preparation container being heated for at least 3 minutes and no longer than 8 minutes at the temperature of at least 80°C and no higher than 120°C.

In some embodiments, the method 200 comprises introducing liquid, such as water, milk and/or another potable liquid, to the food, e.g. to the food preparation container in which the conditioned food is received, to cool the food after the food conditioning stage but before the controlling 204 the mechanical food processing system to mechanically process the food conditioned by the food conditioning stage to extract juice therefrom.

In other embodiments, the food conditioned by the food conditioning stage is used immediately for juice extraction, e.g. without any cooling of the conditioned food, such as via introduction of liquid to the conditioned food.

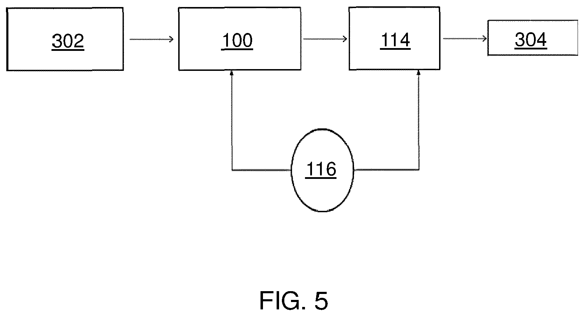

FIG. 5 provides a diagram of system components and method steps according to an example. Block 302 in FIG. 5 corresponds to a food preparation step. In this step 302, the user may select juice drink recipes, for instance via the user interface 120A included in the user device 118, e.g. smartphone or tablet computer, and/or via the user interface 120B included in the domestic food processor 112, which juice drink recipes employ the food conditioning stage according to any of the embodiments described herein.

The juice drink recipes may be selectable via an application running on the user device 118.

For example, the juice drink recipes employing the food conditioning stage may be described as "Typical freshness enhancement recipes", and the selectable juice drink recipes can include, for instance, "Fresh apple drink", "Fresh pear drink", "Fresh pineapple drink", "Fresh cucumber drink", and so on.

Once the user has selected the desired juice drink recipe, the user may following recipe instructions, for example beginning with preparing the food ingredients as required by the selected juice drink recipe, e.g. by cutting or slicing the food into suitably sized and/or shaped pieces.

Block 100 in FIG. 5 corresponds to the temperature control system 100 according to any of the embodiments described herein, which temperature control system 100, in other words pretreatment unit, implements the food conditioning stage.

The precise conditions, e.g. temperature of the atmosphere 102 and/or duration, implemented in the food conditioning stage may based on the selected juice drink recipe, subject to the limits defined herein being satisfied.

In a non-limiting example, the temperature control system/pretreatment unit 100 comprises the water tank 110 for clean water storage, and the heater 108, in other words heating module, for heating the stored water to generate saturated steam.

The water tank 110, for example, includes the pair of water vessels at opposing sides of the food preparation container 104, with the heater 108 including the pair of heating elements, as described above in relation to FIG. 1.

Prior to implementation of the food conditioning stage, the water tank 110 is filled with water, e.g. pure water.

The food conditioning stage is then implemented using the temperature control system 100 by heating the atmosphere 102 in the food preparation container 104 for at least 3 minutes and no longer than 8 minutes at the temperature of at least 80°C and no higher than 120°C. This pretreatment of the food 106 is considered sufficient for inactivation of PME, as previously described.

Block 114 in FIG. 5 corresponds to the mechanical food processing system 114 according to any of the embodiments described herein, which mechanical food processing system 114, in other words food processing unit, implements the mechanical food processing of the conditioned food to extract juice therefrom.

Following the food conditioning stage, in other words pretreatment, the processor(s) 116 may control the user interface 120A, 120B to recommend addition of liquid, such as water, milk and/or another potable liquid, to the food, for example into the food preparation container 104. As well as assisting to cool the conditioned food, such liquid may assist the mechanical food processing, e.g. blending/juicing, session.

The user may accordingly add the liquid referring to the volume scale marks, e.g. the 200 mL, 250 mL, 300 mL, 400 mL, 500 mL and 600 mL scale marks shown in FIG. 1.

As an example of the recommendation for addition of the liquid, the user interface 120A, 120B can be controlled to communicate, e.g. display, the following: "One serving size: 200-250 mL"; "Two serving size: 400-500 mL"; and "More: above 600 mL".

Next, the mechanical food processing system 114 implements the mechanical food processing of the conditioned food to extract juice therefrom, e.g. according to a command from the processor(s) 116.

It is noted that in this non-limiting example, the food conditioning stage and the mechanical food processing of the conditioned food are implemented by the processor(s) 116, e.g. are managed by a central control unit.

Block 304 in FIG. 5 denotes the end of the juice preparation: the mechanical food processing step terminates and the juice is ready for consumption.

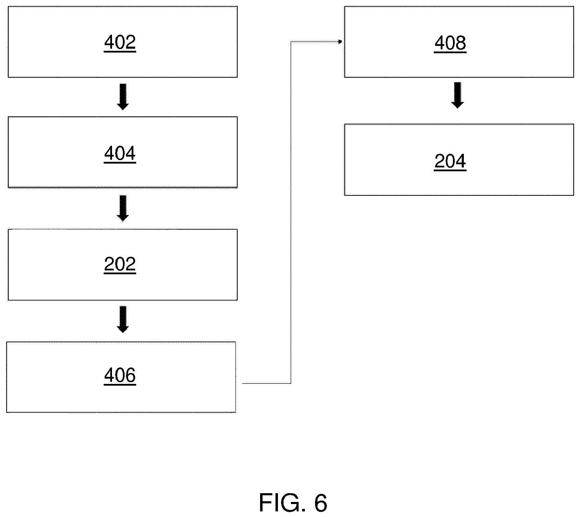

FIG. 6 provides a diagram of method steps according to another example. In 402, the user may select from juice drink recipes, such as juice drink recipes tagged with "enhanced freshness preservation" via the user interface 120A, 120B, for instance via the user interface 120A included in the user device 118, e.g. smartphone or tablet computer, and/or via the user interface 120B included in the domestic food processor 112. The juice drink recipes may be selectable via an application running on the user device 118.

In step 404, the user may follow recipe instructions, for example beginning with preparing the food ingredients as required by the selected juice drink recipe, e.g. by cutting or slicing the food into suitably sized and/or shaped pieces.

The food conditioning stage is implemented in step 202, following receiving of the prepared food ingredients in the food preparation container 104.

Following the food conditioning stage, step 406 corresponds to the user interface 120A, 120B recommending the user to add a liquid, such as water, milk and/or another potable liquid, to the food preparation container 104. The user interface 120A, 120B may provide the volume and identity of liquid to be added. The user may accordingly add, in step 408, the liquid according to the recommendation, e.g. referring to the volume scale marks, as previously described.

Next, the mechanical food processing system 114 implements 204 the mechanical food processing of the conditioned food to extract juice therefrom, for example according to a command from the processor(s) 116, e.g. from the central control unit.

### Example 1

Apple was cut into slices and heated using a temperature control system 100 according to the present disclosure for three minutes at 80°C.

Following the food conditioning stage, the conditioned food was juiced and passed through a 50-mesh filter.

Sedimentation was not observed in the thus conditioned and processed apple juice.

### Example 2

In another experiment, apple was cut into slices and heated using a temperature control system 100 according to the disclosure under varying conditions, as set out in Table 1.

**Table 1**

| Sample number | Temperature for food conditioning stage (°C) | Time for food conditioning stage (minutes) |
|---|---|---|
| 1 | 10 | 5.5 |
| 2 | 80 | 8 |
| 3 | 80 | 3 |
| 4 | 120 | 3 |
| 5 | 120 | 8 |
| 6 | 100 | 5.5 |
| Control | N/A | N/A |

Following the food conditioning stage, the conditioned apple slices were subjected to mechanical food processing to release juice therefrom. A control sample, in which apple slices were not conditioned, was also subjected to mechanical food processing under the same mechanical food processing conditions.

The final product, in other words juice, was monitored for sedimentation over a duration of 5 hours. No sedimentation was observed for any of samples 1-6 during the 5 hours of monitoring. Sedimentation was observed in the control sample immediately following mechanical food processing, and at every hourly observation for the 5 hours, as set out in Table 2.

**Table 2**

| + denotes sedimentation observed; - denotes no sedimentation observed. | | | | | | |
|---|---|---|---|---|---|---|
| Sample number | 0 hours | 1 hour | 2 hours | 3 hours | 4 hours | 5 hours |
| 1 | - | - | - | - | - | - |
| 2 | - | - | - | - | - | - |
| 3 | - | - | - | - | - | - |
| 4 | - | - | - | - | - | - |
| 5 | - | - | - | - | - | - |
| 6 | - | - | - | - | - | - |
| Control | + | + | + | + | + | + |

### Example 3

In yet another experiment, celery was selected as the food.

The celery was heated using a temperature control system 100 according to the disclosure at 120°C for 3 minutes. Celery was not conditioned in this way in a control experiment.

After the food conditioning stage, the conditioned celery was subjected to mechanical food processing to extract juice therefrom, which juice was monitored for 5 hours. After 5 hours, the juice was passed through a 50 mesh and observed for a final time.

In the test samples, no sedimentation was observed at all at 0 hours, 1 hour and 2 hours. Minimal sedimentation was observed at 3 hours, 4 hours, 5 hours and after passing the juice through a 50-mesh.

In the control sample, no sedimentation was observed at 0 hours. Sedimentation was observed at 1 hour and 2 hours. Heavy sedimentation was observed at 3 hours, 4 hours and 5 hours. Very heavy sedimentation was observed after passing the juice through the 50-mesh. Sedimentation levels are set out in Table 3.

**Table 3 sedimentation levels of celery juice: - denotes no sedimentation; + denotes minimal sedimentation; ++ denotes sedimentation; +++ denotes heavy sedimentation; ++++ denotes very heavy sedimentation.**

| Sample | 0 hours | 1 hour | 2 hours | 3 hours | 4 hours | 5 hours | 50-mesh after 5 hours |
|---|---|---|---|---|---|---|---|
| Test | - | - | - | + | + | + | + |
| Control | - | ++ | ++ | +++ | +++ | +++ | ++++ |

### Example 4

In a further experiment, the core temperature of fruit was assessed following heating. Fruit with varying plant morphologies, such as texture and size, was used. Table 4 presents the core temperature after the food conditioning stage for each type of fruit when subjected to different temperatures of the atmosphere 102 inside the food preparation container 104.

**Table 4**

| Fruit | 80°C for 3 minutes | 120°C for 3 minutes | 80°C for 8 minutes | 100°C for 5.5 minutes | 120°C for 8 minutes |
|---|---|---|---|---|---|
| Apple | 23.8 | 30.1 | 60.2 | 64.9 | 71.4 |
| Orange | 29.7 | 35.5 | 64.3 | 71.3 | 75.2 |
| Grape | 61.7 | 64.9 | 70.6 | 73.0 | 78.1 |
| Dragon fruit | 33.8 | 40.3 | 61.0 | 63.9 | 67.6 |
| Carrot | 29.1 | 41.6 | 70.0 | 71.0 | 76.6 |

The core temperature of each fruit type heated in accordance with the food conditioning stage (in which the atmosphere 102 inside the food preparation container 104 is heated by the temperature control system 100 for at least 3 minutes and no longer than 8 minutes at the temperature of at least 80°C and no higher than 120°C) was maintained at less than 80°C.

Even when the maximum temperature, i.e. 120°C, and duration, i.e. 8 minutes, were combined, the maximum core temperature of each fruit type was determined to be less than 80°C.

In preferred embodiments, the duration of the food conditioning stage is typically 5 to 8 minutes, in order to promote sedimentation inhibition whilst avoiding excessive raising of the core temperature of the food. The latter may assist to minimize the taste and/or nutrient content of the juice being compromised by the food conditioning stage.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Functions implemented by a processor may be implemented by a single processor or by multiple separate processing units which may together be considered to constitute a "processor". Such processing units may in some cases be remote from each other and communicate with each other in a wired or wireless manner.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

Any reference signs in the claims should not be construed as limiting the scope.

## Claims

1. A temperature control system (100) for conditioning food received in a food preparation container (104) of a domestic food processor (112) having a mechanical food processing system (114) for extracting juice from the conditioned food, wherein the temperature control system is configured to implement a food conditioning stage in which an atmosphere (102) inside the food preparation container is heated by the temperature control system for at least 3 minutes and no longer than 8 minutes at a temperature of at least 80°C and no higher than 120°C.

2. The temperature control system (100) according to claim 1, comprising a steam generator (108, 110) configured to implement the food conditioning stage by applying steam to the food preparation container (104).

3. The temperature control system (100) according to claim 1 or claim 2, wherein, in the food conditioning stage, the atmosphere (102) inside the food preparation container (104) is heated for at least 5 minutes at said temperature of at least 80°C and no higher than 120°C.

4. The temperature control system (100) according to any one of the preceding claims, wherein the temperature control system is controllable according to a user entry entered via a user interface (120A, 120B), which user entry is relevant to a duration and/or the temperature of the atmosphere (102) of the food preparation container (104) used in the food conditioning stage, subject to the atmosphere inside the food preparation container being heated for at least 3 minutes and no longer than 8 minutes at the temperature of at least 80°C and no higher than 120°C.

5. The temperature control system (100) according to any one of the preceding claims, wherein the temperature control system is controllable by one or more processors (116) to implement the food conditioning stage.

6. A domestic food processor (112) having a mechanical food processing system (114) for extracting juice from food, and a food preparation container (104) in which the food is receivable, wherein the domestic food processor further comprises the temperature control system (100) according to any one of the preceding claims, the temperature control system being configured to implement said food conditioning stage in which the atmosphere (102) inside the food preparation container is heated for at least 3 minutes and no longer than 8 minutes at said temperature of at least 80°C and no higher than 120°C.

7. The domestic food processor (112) according to claim 6, wherein the mechanical food processing system (114) is configured to extract juice from the food subsequently to the food being conditioned in the food conditioning stage.

8. A method (200) for processing food received in a food preparation container of a domestic food processor also having a mechanical food processing system, the method comprising implementing (202) a food conditioning stage in which an atmosphere inside the food preparation container is heated for at least 3 minutes and no longer than 8 minutes at a temperature of at least 80°C and no higher than 120°C.

9. The method (200) according to claim 8, wherein the implementing (202) comprises controlling a steam generator to apply steam to the food preparation container.

10. The method (200) according to claim 8 or claim 9, wherein, in the food conditioning stage, the food preparation container is heated for at least 5 minutes at said temperature of at least 80°C and no higher than 120°C.

11. The method (200) according to any one of claims 8 to 10, further comprising receiving (206) a user entry relevant to the food conditioning stage, wherein the food conditioning stage is implemented (202) based on said user entry, subject to the atmosphere inside the food preparation container being heated for at least 3 minutes and no longer than 8 minutes at the temperature of at least 80°C and no higher than 120°C.

12. The method (200) according to any one of claims 8 to 11, further comprising controlling (204) said mechanical food processing system to mechanically process the food conditioned by the food conditioning stage to extract juice therefrom.

13. The method (200) according to claim 12, wherein the controlling (204) the mechanical food processing system to mechanically process the food begins within at least 10 minutes after the end of the food conditioning stage.

14. The method (200) according to any one of claims 8 to 13, wherein a core temperature of the food is maintained at 80°C or less during said food conditioning stage.

15. A computer program comprising computer program code that is configured, when said computer program is run on one or more processors, to cause said one or more processors to control a temperature control system to implement the food conditioning stage of the method (200) according to any one of claims 8 to 14.
